# EUROPÄISCHE PATENTSCHRIFT

(11) **EP 1 647 427 B1**
(45) Veröffentlichungstag und Bekanntmachung des Hinweises auf die Patenterteilung: **23.04.2008**
(21) Anmeldenummer: 05109483.7
(22) Anmeldetag: 12.10.2005
(51) Int. Cl.: B60H 1/00

(54) **Bedieneinheit für eine Fahrzeugkomponente**
Operating unit of an automotive component
Unité de commande d'un élément de véhicule

(30) Priorität: 12.10.2004 DE 102004049616
(43) Veröffentlichungstag der Anmeldung: 19.04.2006
(73) Patentinhaber: Behr-Hella Thermocontrol GmbH, 70190 Stuttgart (DE)
(72) Erfinder: Lomberg, Christian, 59556 Lippstadt (DE)
(74) Vertreter: von Kreisler Selting Werner

(56) Entgegenhaltungen:
- EP-A1- 0 751 020
- DE-A1- 3 144 739
- DE-U1- 8 906 054
- FR-A- 1 059 632

## Beschreibung

Die Erfindung betrifft eine Bedieneinheit für eine Fahrzeugkomponente, bei der es sich insbesondere um eine Fahrzeug-Temperieranlage, wie beispielsweise eine Fahrzeug-Klimaanlage, handelt.

Verschiedene Fahrzeugkomponenten lassen sich von den Insassen über Bedienelemente von Bedieneinheiten steuern. Im Falle einer Fahrzeug-Heizungsanlage beispielsweise werden im Regelfall über Drehschalter die Temperatur, die Luftverteilung und das Gebläse gesteuert. Zur Verstellung von Temperatur und Luftverteilung sind die Drehbedienelemente über flexible Wellen oder Bowden-Züge mit Verstellklappen der Heizungsanlage verbunden.

Zur Reduktion der Herstellungskosten eines Fahrzeuges ist es bekannt, verschiedene Fahrzeuge mit der gleichen Bedieneinheit auszustatten. Je nach Fahrzeug kann es dabei erforderlich sein, dass die mit einem Drehbedienelement verbundene flexible Übertragungswelle zur Betätigung einer Klappe der Heizungsanlage des Fahrzeuges in unterschiedlichen Winkeln und/oder Richtungen von der Bedieneinheit aus verläuft. Dies ist durch die unterschiedlichen Einbausituationen (z.B. Recht-/Links-Lenker) bedingt. Im Falle einer flexiblen Welle ist diese mit einem Drehzapfen verbunden, der mit dem Drehbedienelement oder einem von diesem drehbaren Element im Regelfall über eine Verzahnung mechanisch gekoppelt ist. Je nach dem Verlauf der flexiblen Welle in der Einbausituation muss der Drehzapfen unterschiedlich ausgerichtet sein. Dadurch steigt die Anzahl von Varianten der Bedieneinheit, was herstellungstechnisch und logistisch mit einem Mehraufwand verbunden ist.

Aus DE-U-89 06 054 ist eine Bedieneinheit für eine Fahrzeugkomponente bekannt mit einem Grundrahmen als Gehäuse, einem Drehknopf, der auf eine in dem Grundrahmen geführte Drehwelle aufgesteckt ist, einer Zwischenwelle, die eine Einstecköffnung für eine biegsame Stahlwelle aufweist, und einem Kreuzgelenk innerhalb des Grundrahmens zwischen der Zwischenwelle und der Drehwelle.

Ferner ist in DE-A-31 44 739 eine drehfeste Kugelgelenkverbindung zwischen /9 der Drehwelle eines drehbaren Bedienelements und einer zu der Drehwelle winklig verlaufenden Welle beschrieben, wobei das Kugelgelenk einen Kugelkopf aufweist, der in einer Kugelgelenkpfanne gelagert ist. Der Kugelkopf weist eine Durchgangsöffnung auf, durch die hindurch sich ein Steckstift erstreckt, der in diametral gegenüberliegende Öffnungen der Kugelgelenkpfanne ragt. Durch diesen Stift wird die maximale Auslenkung der winklig zur Drehwelle verlaufenden Welle begrenzt. Hierzu kontaktiert der Stift korrespondierende Anlageflächen der Durchgangsöffnung.

Der Erfindung liegt die Aufgabe zugrunde, eine Bedieneinheit für eine Fahrzeugkomponente mit Drehbedienelement und sich von diesem aus erstreckender flexible Welle zu schaffen, wobei die Bedieneinheit unabhängig von dem Abgang der flexiblen Welle im wesentlichen unverändert bleiben kann.

Zur Lösung dieser Aufgabe wird mit der Erfindung eine Bedieneinheit für eine Fahrzeugkomponente vorgeschlagen, bei der es sich insbesondere um eine Fahrzeug-Temperieranlage und vorzugsweise um eine Fahrzeug-Klimaanlage handelt, wobei die Bedieneinheit versehen ist mit den Merkmalen des Anspruchs 1.

Die erfindungsgemäße Bedieneinheit weist ein Gehäuse auf, in bzw. an dem ein Drehbedienelement drehbar gelagert ist, das eine Drehwelle aufweist. Die Drehbewegung des Drehbedienelements wird über eine flexible Welle zu einem Stellelement, beispielsweise einer Klappe, übertragen. Zu diesem Zweck ist die Drehwelle des Drehbedienelements mit einem der Aufnahme der flexiblen Welle dienenden Aufnahmeelement über eine Kugelgelenkverbindung verbunden. Die Kugelgelenkverbindung befindet sich dabei innerhalb des Gehäuses und zwar im Wesentlichen zentrisch zu einer durch einen Öffnungsrand begrenzten Öffnung in vorzugsweise der hinteren Wand des Gehäuses. Das Aufnahmeelement für die flexible Welle befindet sich bei der erfindungsgemäßen Bedieneinheit innerhalb dieser Öffnung, wobei seine maximale Schrägausrichtung zur Drehwelle des Drehbedienelements durch den Öffnungsrand der Öffnung begrenzt ist. Der Öffnungsrand der Öffnung in der Wand des Gehäuses dient also als Anschlag für das Aufnahmeelement.

Nach der Erfindung ist also der Winkel und die Richtung, unter dem bzw. in der die flexible Welle sich von der Bedieneinheit aus erstreckt, innerhalb eines durch den Öffnungsrand begrenzten (Raum-)Winkelbereichs variabel. Damit kann für eine Vielzahl von Einbausituationen (Rechts-/Links-Lenker, Fahrzeuge unterschiedlicher Typen gegebenenfalls mit gemeinsamer Plattform) ein und dieselbe Bedieneinheit verwendet werden.

Zweckmäßigerweise handelt es sich bei dem Aufnahmeelement um einen im Wesentlichen rotationssymmetrischen Körper und insbesondere um einen Körper mit zylindrischem, balligern und/oder kegelstumpfförmigem Abschnitt, wobei die Umfangs- bzw spezifisch die Kegelfläche bei maximaler Schrägausrichtung des Aufnahmeelements zur Drehwelle des Drehbedienelements an dem Öffnungsrand anliegt. In dieser Situation ist die Drehung des Drehefements weiter gewährleistet, ohne dass ungewollte Querkräfte auf die flexible Welle bzw. das Aufnahmeelement einwirken, wie dies der Fall sein kann, wenn das Aufnahmeelement in seinem am Öffnungsrand anliegenden Abschnitt von einer rotationssymmetrischen Form abweicht.

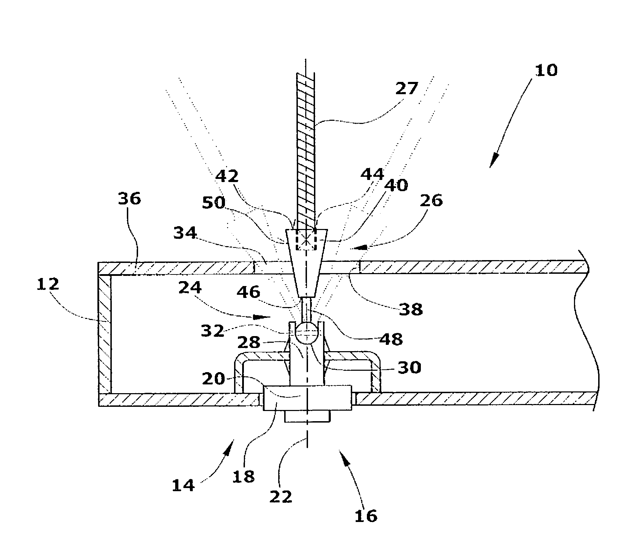

Die Erfindung wird nachfolgend anhand der Zeichnung, die einen Schnitt durch einen Teil einer Kraftfahrzeug-Heizungsanlagen-Bedieneinheit zeigt, näher erläutert.

Wie der Zeichnung zu entnehmen ist, weist die Heizungsbedieneinheit 10 ein Gehäuse 12 auf, an dessen Vorderseite 14 sich ein drehbar gelagertes Bedienelement 16 befindet. Das Bedienelement 16 weist einen Betätigungsknopf 18 auf, von dem aus sich ins Innere des Gehäuses 12 hinein eine Drehwelle 20 erstreckt. Das Bedienelement 16 ist um die Drehachse 22 drehbar gelagert.

An dem dem Betätigungsknopf 18 gegenüber liegenden Ende der Drehwelle 20 befindet sich ein Kugelgelenk 24, über das das Bedienelement 16 mit einem Aufnahmeelement 26 einer flexiblen Welle 27 gekoppelt ist. Das Kugelgelenk 24 ist gebildet durch einen Kugelkopf 28, der Bestandteil des Aufnahmcelements 26 ist, und eine Kugelkopf-Aufnahme 30, die an der Drehwelle 20 ausgebildet ist. Über einen Bolzen 32 ist der Kugelkopf 28 in der Aufnahme 30 drehfest gelagert, wie dies an sich bei Kugelgelenkverbindungen für flexible Wellen üblich ist.

Wie in der Zeichnung zu erkennen ist, befindet sich das Kugelgelenk 24 konzentrisch zu einer Öffnung 34 in der Rückwand 36 des Gehäuses 12. Die Öffnung 34 ist durch einen Öffnungsrand 38 begrenzt, der konzentrisch zum Kugelgelenk 24 verläuft. Das Aufnahmeelement 26 der flexiblen Welle 27 ist innerhalb der Öffnung 34 angeordnet und weist einen rotationssymmetrischen Abschnitt 40 auf, der als Kegelstumpf ausgebildet ist, dessen Grundfläche 42 eine Vertiefung 44 für die Aufnahme der flexiblen Welle 27 aufweist und dessen anderes Ende 46 über einen Zwischenabschnitt 48 mit dem Kugelkopf 28 verbunden ist. Durch diesen rotationssymmetrischen Abschnitt 40 lässt sich die Schrägstellung des Aufnahmeelements 26 relativ zur Drehachse 22 des Bedienelements 16 begrenzen. Diese Begrenzung wird erreicht, wenn das Aufnahmeelement 26 mit der Mantel- bzw. Außenfläche 50 seines rotationssymmetrischen Abschnitts 40 an dem Rand 38 der Öffnung 34 anliegt. Durch die Schrägstellungsbegrenzung wird verhindert, dass das Aufnahmeelement 26 Winkelstellungen relativ zur Drehachse 22 einnimmt, bei denen die Gefahr besteht, dass der Kugelkopf 28 aus der Aufnahme 30 herausgleitet.

### BEZUGSZEICHENLISTE

- 10: Heizungsbedieneinheit
- 12: Gehäuse
- 14: Vorderseite
- 16: Bedienelement
- 18: Betätigungsknopf
- 20: Drehwelle
- 22: Drehachse
- 24: Kugelgelenk
- 26: Aufnahmeelement
- 27: flexible Welle
- 28: Kugelkopf
- 30: Kugelkopf-Aufnahme
- 32: Bolzen
- 34: Öffnung
- 36: Ruckwand
- 38: Öffnungsrand
- 40: Abschnitt
- 42: Grundfläche
- 44: Vertiefung
- 46: Ende des Aufnahmeelements
- 48: Zwischenabschnitt
- 50: Außenseite

## Patentansprüche

1. Bedieneinheit für eine Fahrzeug-Temperieranlage und vorzugsweise für eine Fahrzeug-Klimaanlage mit
- einem Gehäuse (12),
- einem drehbar in oder an dem Gehäuse (12) gelagerten Bedienelement (16), das eine Drehwelle (20) aufweist, und
- einem Aufnahmeelement (26) zum Anschließen einer flexiblen Welle (27),
**gekennzeichnet durch**
- eine drehfeste Kugelgelenkverbindung (24) zwischen dem Aufnahmeelement (26) und der Drehwelle (20) des Bedienelements (16),
- wobei die Kugelgelenkverbindung (24) innerhalb des Gehäuses (12) im Wesentlichen zentrisch zu einer **durch** einen Öffnungsrand (38) begrenzten Öffnung (34) in einer Wand (36) des Gehäuses (12) angeordnet ist und
- wobei sich das Aufnahmeelement (26) **durch** die Öffnung (34) hindurch erstreckt und der Öffnungsrand (38) die maximale Winkelausrichtung des Aufnahmeelements (26) relativ zur Drehwelle (20) des Bedienelements (16) begrenzt.

2. Bedieneinheit nach Anspruch 1, **dadurch gekennzeichnet, dass** das Aufnahmeelement (26) einen rotationssymmetrischen Abschnitt (40) aufweist, dessen Außenseite (50) bei Einnahme der maximalen Winkelausrichtung in Anlage mit dem Öffnungsrand (38) der Öffnung (34) des Gehäuses (12) gelangt.

## Claims

1. An operating unit for a vehicle temperature control system and preferably for a vehicle air conditioning system, comprising
- a housing (12),
- an operating element (16) rotatably supported in or at the housing (12) and comprising a rotary shaft (20), and
- a receiving element (26) for connecting a flexible shaft (27),
**characterized by**
- a torque-proof ball joint connection (24) between the receiving element (26) and the rotary shaft (20) of the operating unit (16),
- wherein, within the housing (12), the ball joint connection (24) is arranged substantially centrically with respect to an opening (34) in a wall (36) of the housing (12), said opening being defined by an opening edge (38), and
- wherein the receiving element (26) extends through the opening (34) and the opening edge (38) limits the maximum angular orientation of the receiving element (26) with respect to the rotary shaft (20) of the operating element (16).

2. The operating element of claim 1, **characterized in that** the receiving element (26) has a rotationally symmetric section (40) whose outer surface (50) comes into contact with the opening edge (38) of the opening (34) of the housing (12) when the element assumes the maximum angular orientation.

## Revendications

1. Unité de commande pour un système de réglage de température de véhicule et, de préférence, pour un climatiseur de véhicule, comprenant
- un boîtier (12),
- un élément de commande (16) supporté rotatif dans ou au boîtier (12) et comprenant un arbre tournant (20), et
- un élément récepteur (26) pour y raccorder un arbre flexible (27),
**caractérisée par**
- un raccord à joint sphérique (24) résistant à la torsion prévu entre l'élément récepteur (26) et l'arbre tournant (20) de l'élément de commande (16),
- dans le boîtier (12), le raccord à joint sphérique (24) étant disposé essentiellement de manière centrale par rapport à une ouverture (34) dans une paroi (36) du boîtier (12), l'ouverture étant délimitée par un bord d'ouverture (38), et
- l'élément récepteur (26) s'étendant à travers l'ouverture (34) et le bord d'ouverture (38) limitant l'orientation angulaire maximal de l'élément récepteur (26) par rapport à l'arbre tournant (20) de l'élément de commande (16).

2. Unité de commande selon la revendication 1, **caractérisée en ce que** l'élément récepteur (26) comprend une section à symétrie de rotation (40), dont la face extérieure (50) vient en contact avec le bord (38) de l'ouverture (34) du boîtier (12) quand l'élément est dans la position angulaire maximale.
